# EUROPEAN PATENT APPLICATION

(11) **EP 4 385 578 A2**
(43) Date of publication of application: **19.06.2024**
(21) Application number: 23209901.0
(22) Date of filing: 14.11.2023
(51) Int. Cl.: A62B 18/02

(54) **RESPIRATORY PROTECTIVE DEVICES AND METHODS OF ASSEMBLING THE SAME USING ULTRASONIC WELDING**

(30) Priority: 14.12.2022 CN 202211602447
(71) Applicant: Honeywell Safety Products USA, Inc., Charlotte, NC 28202 (US)
(72) Inventor: TIAN, Hang, Charlotte, 28202 (US); CHEN, En Yi, Charlotte, 28202 (US)
(74) Representative: Haseltine Lake Kempner LLP

(57) **Abstract**

Various embodiments are directed to mask components of respiratory protective devices and methods of using the same. In various embodiments, an exemplary mask component for a respiratory protective device comprising: an inner shell component configured to engage user's face; a non-rigid outer shell component; and a structural rib provided along a surface of the outer shell component, the structural rib being configured to provide structural support for the non-rigid outer shell component; wherein the structural rib is configured to detachably engage the inner shell component to secure the outer shell component in an aligned position defined by a surface of the structural rib being disposed adjacent a welding lip defined by the inner shell component, the welding lip being configured for coupling to the structural rib via an ultrasonic welding means to define an attachment interface at which the inner shell component is secured relative to the structural rib.

## Description

### FIELD OF THE INVENTION

Various embodiments of the present disclosure relate generally to a respiratory protective device and, more particularly, to apparatuses and methods for providing a mask component having an outer shell component that is operably connected to an inner shall component via an ultrasonic welding of the inner shell component to a structural rib attached to the outer shell component.

### BACKGROUND

Applicant has identified many technical challenges and difficulties associated with personal protective equipment such as respirators and other breathing-related protective equipment. Through applied effort, ingenuity, and innovation, Applicant has solved problems related to these wearable accessory arm straps by developing solutions embodied in the present disclosure, which are described in detail below.

### BRIEF SUMMARY

Various embodiments are directed to mask components of respiratory protective devices and methods of using the same. In various embodiments, an exemplary mask component may comprise A mask component for a respiratory protective device, the mask component comprising: an inner shell component configured to engage a face of a user; an outer shell component having an at least substantially non-rigid configuration such that at least a portion of the outer shell component is bendable; and a structural rib provided along one or more surfaces of the outer shell component, the structural rib having an at least partially rigid configuration such that the structural rib is configured to provide structural support for the non-rigid outer shell component; wherein the structural rib is configured to detachably engage at least a portion of the inner shell component to secure the outer shell component in an aligned position relative to the inner shell component; and wherein the aligned position is defined by one or more surfaces of the structural rib being disposed at least substantially adjacent a welding lip defined by the inner shell component, the welding lip being configured for coupling to the one or more surfaces of the structural rib via an ultrasonic welding means to define one or more attachment interfaces at which the inner shell component is at least partially secured relative to the structural rib.

In various embodiments, the welding lip defined by the inner shell component may be provided along at least a portion of one or more outer surfaces of the inner shell component. In certain embodiments, at least a portion of the welding lip may be arranged at least substantially adjacent a perimeter edge defined by an inner shell indentation portion of the inner shell component. In various embodiments, at least a portion of the outer shell component may be made from a thermoplastic polyurethane material. In various embodiments, at least a portion of the structural rib may be made from a polycarbonate material. In various embodiments, the structural rib may comprise a central rib portion defined by a first rib thickness, and one or more rib arm portions defined by a second rib thickness, wherein the first rib thickness is at least substantially less than the second rib thickness. In various embodiments, the structural rib may be formed using an over-molding process. In certain embodiments, the mask component may define one or more undercut structures provided at an inner surface of the outer shell component, wherein the one or more undercut structures are configured to enhance a binding force acting between the outer shell component and the structural rib during the over-molding process.

In various embodiments, the ultrasonic welding means may be defined at least in part by causing a vibration of the inner shell component using ultrasonic vibrations such that at least a portion of the welding lip engaged with the structural rib is at least partially melted. In various embodiments, one or more internal mask components configured to enable operation of the mask component may be secured in an installed position relative to an inner surface of the outer shell component. In certain embodiments, each of the one or more internal mask components may be configured to enable operation of the mask component is separated from the structural rib by a respective separation distance that is at least 1.0 mm.

Various embodiments are directed to a mask component for a respiratory protective device, the mask component comprising: an inner shell component configured to engage a face of a user, the inner shell component comprising one or more inner shell alignment elements; an outer shell component having an at least substantially non-rigid configuration such that at least a portion of the outer shell component is bendable; and a structural rib provided along one or more surfaces of the outer shell component and configured to provide structural support for the non-rigid outer shell component, the structural rib defining one or more outer shell alignment elements configured to engage the one or more inner shell alignment elements to operably couple the structural rib to the inner shell component via a detachable connection; wherein the one or more inner shell alignment elements are distributed about an outer surface of the inner shell surface such that, upon establishing the detachable connection of the structural rib to the inner shell component, the outer shell element is disposed in an aligned position in which one or more surfaces of the structural rib are disposed at least substantially adjacent a welding lip defined by the inner shell component such that the welding lip is configured for coupling to the one or more surface of the structural rib via an ultrasonic welding means.

In various embodiments, the one or more inner shell alignment elements may define a plurality of inner shell alignment elements and the one or more outer shell alignment elements define a plurality of outer shell alignment elements, each of the plurality of inner alignment elements being configured for engagement with a respective outer shell alignment element of the plurality of outer shell alignment elements. In various embodiments, each of the one or more outer shell alignment elements may comprise at least one chamfered engagement surface configured for physically contacting the corresponding inner shell alignment element, wherein the chamfered engagement surface defines an angled configuration configured to at least partially reduce a resistance force imparted on the outer shell alignment element as the outer shell alignment element moves relative to the corresponding inner shell alignment element engaged therewith. In various embodiments, the structural rib may be formed using an over-molding process. In various embodiments, the engagement of the outer shell alignment element with the corresponding inner shell alignment element is defined by a snap connection. In certain embodiments, the one or more outer shell alignment elements may include a first outer shell alignment element embodying a male buckle fastener and the one or more inner shell alignment elements includes a first inner shell alignment element corresponding to the first outer shell alignment element and embodying a female buckle fastener, wherein the snap connection is defined at least in part by the male buckle fastener being received by the female buckle fastener to at least partially restrict a movement of the first outer shell alignment element relative to the first inner shell alignment element in one or more directions.

Various embodiments are directed to a method of assembling a mask component for a respiratory protective device, the method comprising: securing one or more outer shell alignment elements defined by a structural rib operably attached to an outer shell component to a corresponding one or more inner shell alignment elements to detachably secure the outer shell component in an aligned position relative to the inner shell component, wherein the aligned position is defined by one or more surfaces of the structural rib being disposed at least substantially adjacent a welding lip defined by the inner shell component; and coupling the one or more surfaces of the structural rib to the welding lip via an ultrasonic welding means to define one or more attachment interfaces at which the inner shell component is at least substantially permanently coupled to the structural rib.

In various embodiments, coupling the one or more surfaces of the structural rib to the welding lip via the ultrasonic welding means may comprise: vibrating the inner shell component using ultrasonic vibrations generated by a vibration generator engaged with the inner shell component such that at least a portion of the welding lip engaged with the structural rib is at least partially melted; and upon the at least a portion of the welding lip engaged with the structural rib being at least partially melted, stopping the ultrasonic vibrations to enable a cooling of the at least partially melted welding lip; wherein the cooling of the at least partially melted welding lip is defined at least in part by a re-solidified portion of the welding lip being at least substantially bonded to the one or more surface of the structural rib. In various embodiments, the method may further comprise engaging the outer shell component with a fixed plate while the inner shell component is being vibrated so as to at least partially isolate the outer shell component from the ultrasonic vibrations vibrating the inner shell component.

### BRIEF DESCRIPTION OF THE DRAWINGS

Reference will now be made to the accompanying drawings, which are not necessarily drawn to scale, and wherein:
FIG. 1 illustrates an example perspective view of an example respiratory protective device in accordance with some example embodiments described herein;
FIG. 2A illustrates an example exploded view of an example mask component in accordance with some example embodiments described herein;
FIG. 2B illustrates another example exploded view of an example mask component in accordance with some example embodiments described herein;
FIG. 2C illustrates another example exploded view of an example mask component in accordance with some example embodiments described herein;
FIG. 2D illustrates an example back view of an example mask component in accordance with some example embodiments described herein;
FIGS. 3A-3C illustrate various perspective views of various components of an exemplary mask component in accordance with various embodiments described herein;
FIG. 4 illustrates an exemplary structural rib of an exemplary mask component in accordance with various embodiments described herein;
FIG. 5 illustrates an exemplary inner shell component of an exemplary mask component in accordance with various embodiments described herein;
FIGS. 6A illustrates a front perspective view of an exemplary inner shell component and a rear perspective view of an exemplary outer shell component of an exemplary mask component in accordance with various embodiments described herein;
FIG. 6B illustrates an isolated cutaway view of various components of an exemplary mask component in accordance with various embodiments described herein;
FIGS. 7A and 7B illustrate isolated cutaway views of various components of an exemplary mask component in accordance with various embodiments described herein;
FIG. 8 illustrates an example circuit diagram of an example respiratory protective device in accordance with various embodiments described herein; and
FIG. 9 illustrates an example flow diagram showing steps of an exemplary method of assembling an exemplary mask component in accordance with various embodiments of the present disclosure described herein.

### DETAILED DESCRIPTION

The present disclosure more fully describes various embodiments with reference to the accompanying drawings. It should be understood that some, but not all embodiments are shown and described herein. Indeed, the embodiments may take many different forms, and accordingly this disclosure should not be construed as limited to the embodiments set forth herein. Rather, these embodiments are provided so that this disclosure will satisfy applicable legal requirements. Like numbers refer to like elements throughout.

It should be understood at the outset that although illustrative implementations of one or more aspects are illustrated below, the disclosed assemblies, systems, and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents. While values for dimensions of various elements are disclosed, the drawings may not be to scale.

The words "example," or "exemplary," when used herein, are intended to mean "serving as an example, instance, or illustration." Any implementation described herein as an "example" or "exemplary embodiment" is not necessarily preferred or advantageous over other implementations.

Respiratory protective devices (such as, but not limited to, masks, respirators, and/or the like) can protect our health, especially in the COVID-19 pandemic. For example, wearing a respiratory protective device can help slow the spread of the virus, and people are recommended or required to wear face masks in indoor public places and outdoors where there is a high risk of COVID-19 transmission (such as crowded events or large gatherings).

However, many respiratory protective devices are plagued by technical disadvantages and difficulties, resulting in people not wearing them even when there is infection risk. For example, many users are unable to breathe enough air through the respiratory protective device, especially when they are exercising (e.g. running). Additionally, when a user is wearing a respiratory protective device, the respiratory protective device may create an enclosed space on the user's face that has a high humidity level and/or a high temperature level. As such, the user may not feel comfortable to wear such a respiratory protective device (especially when the user is also wearing glasses and/or during summer).

PAPR (Powered Air Purifying Respirator) is an air-purifying respirator that uses a blower to force air through filter cartridges or canisters and into the breathing zone of the wearer. However, PAPR is heavy due to complex electrical and mechanical components, and its use time is very limited mainly caused by battery capacity constraints. As such, PAPR is mostly for industrial scenarios.

Various respiratory protective devices include multi-part mask components in which the various components are secured relative to one another using various mechanical fastener elements, such as, for example, screws, nuts, bolts, and/or the like, or adhesives, including glue, tape, and/or the like. Such means of assembly can present issues with respect to ineffective sealing and/or adhering of parts, in addition to causing an increase in the product weight defined by the mask component. Various application utilize ultrasonic welding as an effective means of securing two components relative to one another during assembly of the mask component. In respiratory protective devices wherein one or more of the mask component parts being ultrasonically welded is made of a soft material (e.g., a plastic), however, the vibrations and extreme temperature increases associated with an ultrasonic welding process can result in component deformation, warping, melting, and/or other undesirable damage that leads to an ineffective assembly condition and/or the mask component being rendered inoperable.

The present invention is directed to a mask component for a respiratory protective device that utilizes an at least partially rigid structural rib attached to a soft (e.g., bendable) outer shell component for operatively coupling the outer shell component to the inner shell component by ultrasonically welding the structural rib to a welding lip provided along an outer surface of the inner shell component. The structural rib attached to the outer shell component may provide structural support for the non-rigid, bendable outer shell component, while also providing an interface for the welding lip of the inner shell component to be secured relative to the outer shell component (e.g., at a surface of the structural rib) via an ultrasonic welding means. For example, the vibrations and extreme temperature increases resulting from the ultrasonic welding process may cause the welding lip engaged with the structural rib to at least partially melt such that, upon the ultrasonic vibrations being stopped, the melted welding lip may cool down and form a bond at the surface of the structural rib that establishes an at least substantially permanent attachment of the inner shell component relative to the bendable outer shell component via the attachment interface defined by the structural rib surface and the welding lip. As described herein, the present invention may further include a plurality of alignment elements provided in corresponding positions on the inner and outer sell components such that an engagement of corresponding alignment elements defined by the inner and outer shell components, respectively, may define a detachable connection of the outer shell component in a properly aligned position relative to the inner shell component.

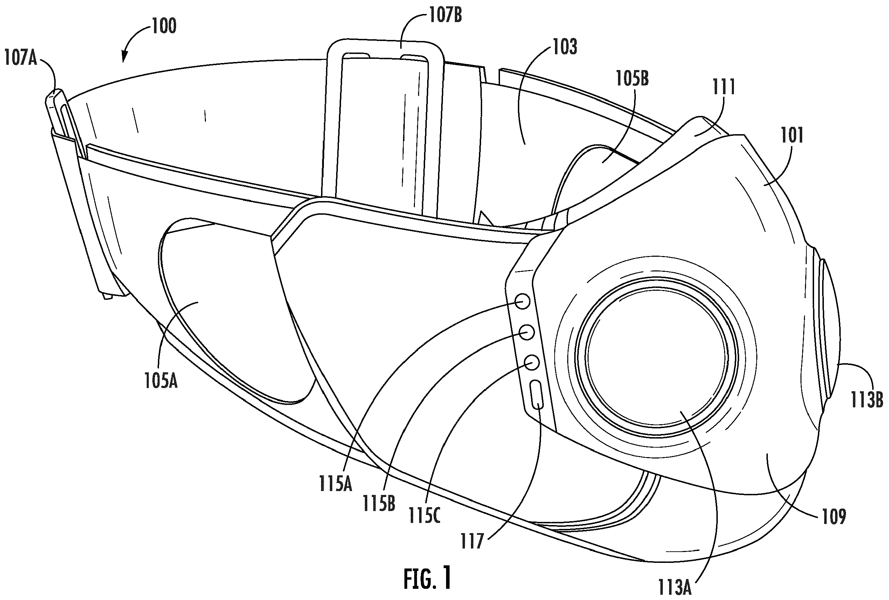

Referring now to FIG. 1, an example perspective view of an example respiratory protective device (also referred to as a respiratory protective equipment) 100 in accordance with some example embodiments described herein is illustrated.

In some embodiments, the example respiratory protective device 100 is in the form of a respirator or a mask. For example, as shown in FIG. 1, the example respiratory protective device 100 comprises a mask component 101 and a strap component 103.

In some embodiments, the strap component 103 may be in the form of a mask strap. For example, in some embodiments, the strap component 103 may comprise elastic material(s) such as, but not limited to, polymers, thermoplastic elastomer (TPE), and/or the like. In some embodiments, the elastic material may allow the example respiratory protective device 100 to be secured to a user's face.

In some embodiments, the strap component 103 may comprise an ear opening 105A and an ear opening 105B. When the example respiratory protective device 100 is worn by a user, the ear opening 105A and the ear opening 105B may allow the user's left ear and the right ear to pass through.

In some embodiments, the strap component 103 may be inserted through one or more strap bucket components (such as a strap bucket component 107A and a strap bucket component 107B as shown in FIG. 1). In some embodiments, the one or more strap bucket components may be in the form of one or more buckles that include, but not limited to, a tri-glide buckle), and may allow a user to adjust the length of the strap component 103 so that the example respiratory protective device 100 can be secured to a user's face.

In some embodiments, the mask component 101 is connected to the strap component 103. For example, a first end of the strap component 103 is connected to a first end of the mask component 101, and a second end of the strap component 103 is connected to a second of the mask component 101. In this example, the first end of the mask component 101 is opposite to the second end of the mask component 101. In the example shown in FIG. 1, an end of the strap component 103 may be secured to the mask component 101 via a fastener component 117 (such as, but not limited to, a snap button).

In some embodiments, the mask component 101 may be in the form of a mask or a respirator. For example, as shown in FIG. 1, the mask component 101 may comprise an outer shell component 109 and a face seal component 111.

In some embodiments, when the example respiratory protective device 100 is worn by a user, an outer surface of the outer shell component 109 is exposed to the outside environment. In some embodiments, the face seal component 111 is attached to and extends from a periphery and/or edge of the outer shell component 109 (or an inner shell component of the mask component as described herein).

In particular, the face seal component 111 may comprise soft material such as, but not limited to, silica gel. In some embodiments, when the example respiratory protective device 100 is worn by a user, the face seal component 111 is in contact with the user's face, and may seal the example respiratory protective device 100 to at least a portion of a user's face. As described above, the example respiratory protective device 100 includes strap component 103 that allows the example respiratory protective device 100 to be secured to the user's face. As such, the face seal component 111 can create at least partially enclosed (or entirely enclosed) space between at least a portion of the user's face (e.g. mouth, nostrils, etc.), details of which are described herein.

In some embodiments, the mask component 101 comprises one or more puck components that cover one or more inhalation filtration components of the example respiratory protective device 100. For example, as shown in FIG. 1, the example respiratory protective device 100 comprises a first puck component 113A that is disposed on a left side of the outer shell component 109 and a second puck component 113B that is disposed on a right side of the outer shell component 109. In such an example, the first puck component 113A covers a first inhalation filtration component that is disposed on the left side of the mask component 101, and the second puck component 113B covers a second inhalation filtration component that is disposed on the right side of the mask component 101, details of which are described herein.

In some embodiments, the mask component 101 comprises one or more key components (such as, but not limited to, the key component 115A, the key component 115B, and the key component 115C) that may allow a user to manually control the operations of the fan component of the mask component 101 and/or other devices (such as, but not limited to, earphones) that are in electronic communication with the example respiratory protective device 100.

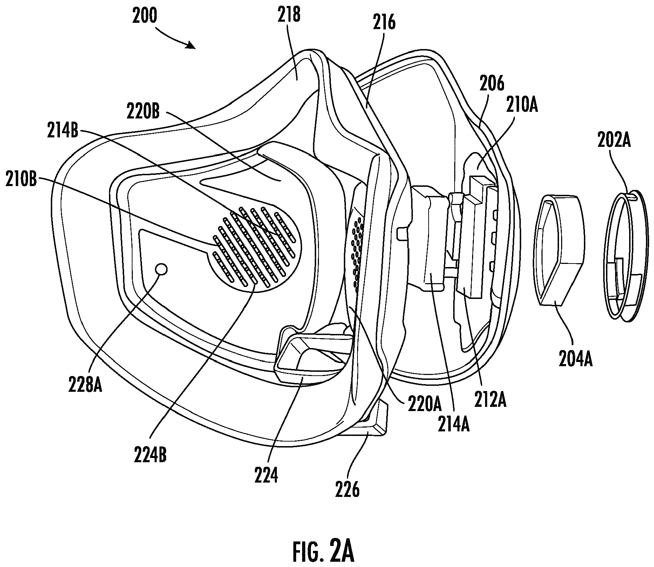

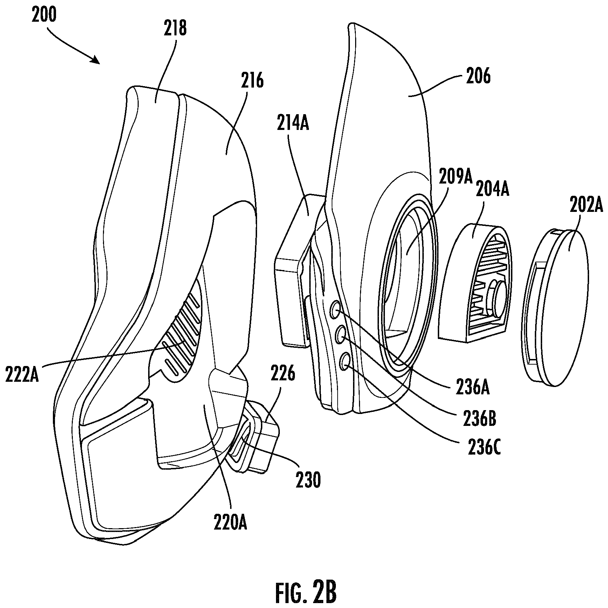

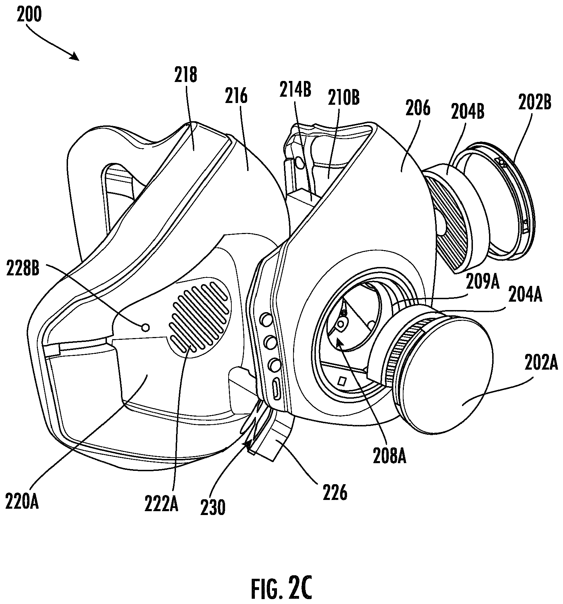

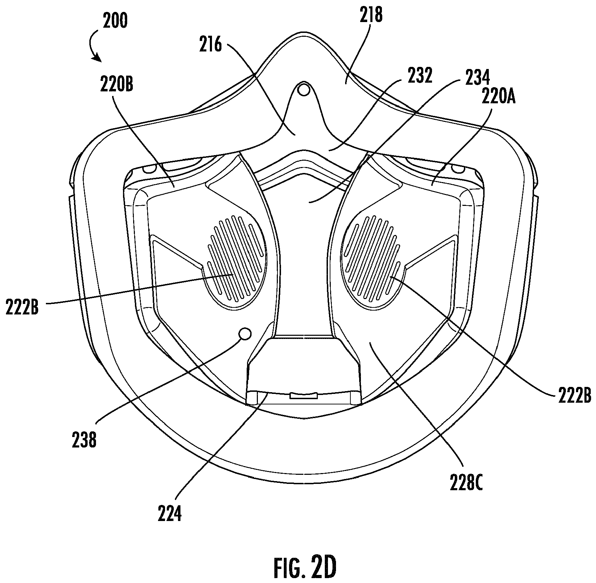

Referring now to FIG. 2A, FIG. 2B, FIG. 2C, and FIG. 2D, examples views of an example mask component 200 in accordance with some example embodiments described herein are illustrated. In particular, FIG. 2A to FIG. 2C illustrate example exploded views of the example mask component 200, and FIG. 2D illustrates an example back view of the example mask component 200.

As shown in FIG. 2A, the mask component 200 comprises an outer shell component 206 and an inner shell component 216.

In some embodiments, the inner shell component 216 may be in a shape that is based on the contour of the user's face. In particular, when the mask component 200 is worn by a user, at least a portion of the user's face (such as, but not limited to, mouth, nostrils) are housed within the inner shell component 216.

In some embodiments, the mask component 200 may comprise a face seal component 218. In some embodiments, the face seal component 218 is attached to and extends from a periphery and/or edge of the inner shell component 216. Similar to the face seal component 111 described above in connection with FIG. 1, the face seal component 216 may comprise soft material such as, but not limited to, silica gel.

In some embodiments, when the mask component 200 is worn by a user, the face seal component 218 and an inner surface of the inner shell component 216 create an enclosed space on at least a portion of the user's face (e.g. on the mouth, nostrils, etc.).

Similar to the inner shell component 216 described above, the shape of the outer shell component 206 may be based on a contour of the user's face. In some embodiments, when the mask component 200 is assembled, the inner surface of the outer shell component 206 is secured to an outer surface of the inner shell component 216. In some embodiments, the inner shell component 216 may comprise one or more indentation portions on the outer surface of inner shell component 216.

For example, referring now to FIG. 2B, the inner shell component 216 may comprise inner shell indentation portions such as, but not limited to, an inner shell indentation portion 220A that is on a left side of the mask component 200 and an inner shell indentation portion 220B that is on a right side of the mask component 200. In particular, each of the inner shell indentation portion 220A and inner shell indentation portion 220B may be sunken or depressed from the outer surface of inner shell component 216. As such, when the outer shell component 206 is secured to the inner shell component 216, the indentation portions may create space that houses electronic components.

Referring back to FIG. 2A, in some embodiments, one or more circuit board components (such as, but not limited to, a circuit board component 210A), one or more charging circuit components (such as, but not limited to, a charging circuit component 212A), and one or more fan components (such as, but not limited to, a fan component 214A) may be disposed in the space that is defined by the inner shell indentation portion 220A and the inner surface of the outer shell component 206. Similarly, one or more circuit board components (such as, but not limited to, a circuit board component 210B), one or more charging circuit components, and one or more fan components (such as, but not limited to, a fan component 214B) may be disposed in the space that is defined by the inner shell indentation portion 220B and the inner surface of the outer shell component 206. For example, the fan component 214A may be disposed on the right side of the example mask component 200 and the fan component 214B may be disposed on the left side of the example mask component 200.

In some embodiments, the circuit board component 210A comprises a circuit board (such as, but not limited to a printed circuit board (PCB)) where other electronic components can be secured to and be in electronic communications with one another. For example, a controller component, the charging circuit component 212A and the fan component 214A may be secured to the circuit board component 210A and be in electronic communication with one another.

In some embodiments, the charging circuit component 212A may comprise a charging circuit and/or a battery that supplies power to the controller component and/or the fan component 214A. For example, the charging circuit may include a Universal Serial Bus (USB) charger circuit that is connected to a rechargeable battery.

In some embodiments, the fan component 214A may comprise an electric fan. In some embodiments, the electric fan of the fan component 214A may operate at different rotation speeds. For example, the fan component 214A may be a stepped fan that provides different, predetermined settings for the rotation speeds. Additionally, or alternatively, the fan component 214A may be a stepless fan that enables continuous adjustment of the rotation speed.

In some embodiments, the electric fan of the fan component 214A may operate at different rotational directions. For example, the fan component 214A may operate in a forward direction or a reverse direction. As an example, when the fan component 214A operates in the forward rotational direction, the electric fan of the fan component 214A may rotate counter-clockwise (when viewing from a user wearing the mask component 200) and/or may operate as a blower that draws air from outside the mask component 200 to inside the mask component 200. As another example, when the fan component 214A operates in the reverse rotational direction, the electric fan of the fan component 214A may rotate clockwise (when viewing from a user wearing the mask component 200) and/or may operate as an exhaust/ventilation fan that draws air from inside the mask component 200 to outside the mask component 200.

In some embodiments, the start time, the stop time, the rotational directions (e.g. forward direction or reverse direction) and/or the rotation speed of the electric fan of the fan component 214A may be controlled and/or adjusted by the controller component.

For example, the controller component may transmit a forward rotation start signal to the fan component 214A that causes the fan component 214A to start forward rotation (e.g. start operating as a blower that draws air from outside the mask component 200 towards inside the mask component 200). In some embodiments, the forward rotation start signal may include a forward rotation speed value that indicates the speed for the fan component 214A. Additionally, or alternatively, the controller component may transmit a forward rotation stop signal to the fan component 214A that causes the fan component 214A to stop forward rotation.

Additionally, or alternatively, the controller component may transmit a reverse rotation start signal to the fan component 214A that causes the fan component 214A to start reverse rotation (e.g. start operating as an exhaust fan that draws air from inside the mask component 200 towards outside the mask component 200). In some embodiments, the reverse rotation start signal may include a reverse rotation speed value that indicates the speed for the fan component 214A. Additionally, or alternatively, the controller component may transmit a reverse rotation stop signal to the fan component 214A that causes the fan component 214A to stop reverse rotation.

Referring now to FIG. 2C, the mask component 200 may comprise one or more inhalation filtration components (such as, but not limited to, inhalation filtration component 204A and inhalation filtration component 204B) and one or more puck components (such as, but not limited to puck component 202A and puck component 202B).

In some embodiments, each of the one or more inhalation filtration components may comprise a filter media element that comprise filter material for filtering air. Examples of filter material include, but are not limited to, HEPA filters. In some embodiments, each of the one or more puck components may be positioned to cover one of the inhalation filtration components so as to prolong the lifespan of the mask component 200. For example, the puck component 202A may cover the inhalation filtration component 204A, and the puck component 202B may cover the inhalation filtration component 204B.

As shown in FIG. 2C, the outer shell component 206 of the example mask component 200 may comprise one or more outer shell indentation portions (such as the outer shell indentation portion 209A). In particular, each of the outer shell indentation portion 209A may be sunken or depressed from the outer surface of outer shell component 206. In some embodiments, one or more inhalation filtration components may be disposed in the outer shell indentation portions. For example, as shown in FIG. 2C, an inhalation filtration component 204A is disposed in the outer shell indentation portion 209A.

In some embodiments, each of the one or more outer shell indentation portions may comprise an air inlet opening, and each of the one or more inner shell indentation portions may comprise one or more air inlet slots. In some embodiments, when the mask component 200 is assembled and in use, the air inlet opening on the outer shell indentation portion is aligned with the one or more air inlet slots on the inner shell indentation portion.

For example, as shown in FIG. 2C, the air inlet opening 208A on the outer shell indentation portion 209A of the outer shell component 206 is aligned with the air inlet slots 222A on the inner shell indentation portion 220A of the inner shell component 216.

In this example, when the mask component 200 is worn by a user and the user inhales, air is drawn from the outside environment and travels through the inhalation filtration component 204A, through the air inlet opening 208A, through the air inlet slots 222A, and arrive at the user's mouth or nostrils. As described above and shown in FIG. 2A and FIG. 2B, the fan component 214A is disposed on the inner shell indentation portion 220A (where the air inlet slots 222A are located). In some embodiments, when the user inhales, the fan component 214A may operate in a forward direction that draws air from outside the mask component 200 towards inside the mask component 200, thereby facilitating the inhaling of the user.

Referring now to FIG. 2D, an example back view of the example mask component 200. In particular, FIG. 2D illustrates the view of the example mask component 200 when it is worn by a user and viewed by the user.

As shown in FIG. 2D, the example mask component 200 may comprise air inlet slots 222A that are located on the middle right side of the inner shell component 216, and air inlet slots 222B that are located on the middle left side of the inner shell component 216. For example, the inner surface 232 of the inner shell component 216 may comprise a nose portion 234, where a user may put his or her nose when the mask component 200 is worn. In this example, the air inlet slots 222A may be located to the right of the nose portion 234, and the air inlet slots 222B may be located to the left of the nose portion 234.

In some embodiments, the example mask component 200 may comprise an outlet opening 224 that is on a middle bottom portion of the inner shell component 216. In some embodiments, the outlet opening 224 may be located corresponding to the position of the user's mouth. For example, when a user exhales, the breath may be released through the outlet opening 224.

As shown in FIG. 2A to FIG. 2C, an exhalation filtration component 226 may be connected to the inner shell component 216 at the outlet opening 224. For example, the exhalation filtration component 226 may cover the outlet opening 224. In some embodiments, the exhalation filtration component 226 may comprise a filter media element that comprise filter material for filtering air. Examples of filter material include, but are not limited to, HEPA filters. As such, the breath that is exhaled by the user may be filtered before it is released from inside the mask component 200 to the outside environment.

In some embodiments, the exhalation filtration component 226 may comprise a humidity component 230 that at least partially covers the outlet opening 224 of the inner shell component 216. The humidity sensor component 230 may comprise a humidity sensor that may, for example but not limited to, detect humidity levels within the enclosed space and/or in the breath exhaled by the user. Examples of the humidity sensor component 230 include, but are not limited to, capacitive humidity sensors, resistive humidity sensors, thermal humidity sensors, and/or the like. In some embodiments, the humidity sensor component 230 is in electronic communication with the controller component, and may transmit humidity indications to the controller component indicating the detected humidity levels (for example, relative humidity levels).

In some embodiments, the mask component 200 may comprise one or more pressure sensor components. As described above and as shown in FIG. 2B, when the mask component 200 is worn by a user, the face seal component 218 and an inner surface 232 of the inner shell component 216 create an enclosed space on at least a portion of the user's face (e.g. on the mouth, nostrils, etc.). In some embodiments, a pressure sensor component may comprise a pressure sensor that detects the air pressure within this enclosed space. Examples of the pressure sensor components include, but are not limited to, resistive air pressure transducer or strain gauge, capacitive air pressure transducer, inductive air pressure transducer, and/or the like.

For example, as shown in FIG. 2A, a pressure sensor component 228A may be disposed on an inner surface of the inner shell component 216. Additionally, or alternatively, as shown in FIG. 2C, a pressure sensor component 228B may be disposed on the inner shell indentation portion 220A of the inner shell component 216. Additionally, or alternatively, as shown in FIG. 2D, a pressure sensor component 228C may be disposed on the inner surface of the inner shell component 216. The pressure sensor component 228A, the pressure sensor component 228B, and/or the pressure sensor component 228C may detect the air pressure within the enclosed space defined by the face seal component 218 and the inner shell component 216 on at least a portion of the user's face.

In some embodiments, the one or more pressure sensor components are in electronic communication with the controller component, and may transmit air pressure indications to the controller component indicating the detected air pressure. For example, each of the air pressure indications may comprise an air pressure value that corresponds to the air pressure in the enclosed space as defined by the face seal component 218 and the inner shell component 216.

While the description above provides an example mask component, it is noted that the scope of the present disclosure is not limited to the description above. In some examples, an example mask component may comprise one or more additional and/or alternative elements. For example, an example mask component may comprise less than two or more than two fan components. Additionally, or alternatively, an example mask component may comprise less than two or more than two inhalation filtration components.

In some embodiments, mask component 200 may include one or more key components, such as, but not limited to, a key component 236A, a key component 236B, and a key component 236C. In some embodiments, the one or more key components may be disposed on an outer surface of the outer shell component 206. Each of the one or more key components may provide a button that allow a user to control and/or adjust the operations of various electronic components described herein (such as, but not limited to, fan components, earphones, and/or the like.)

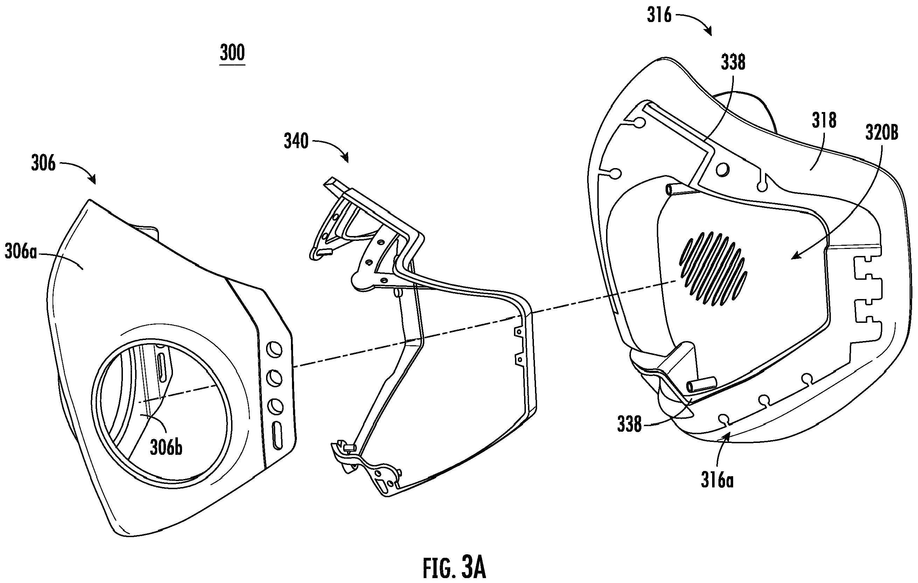

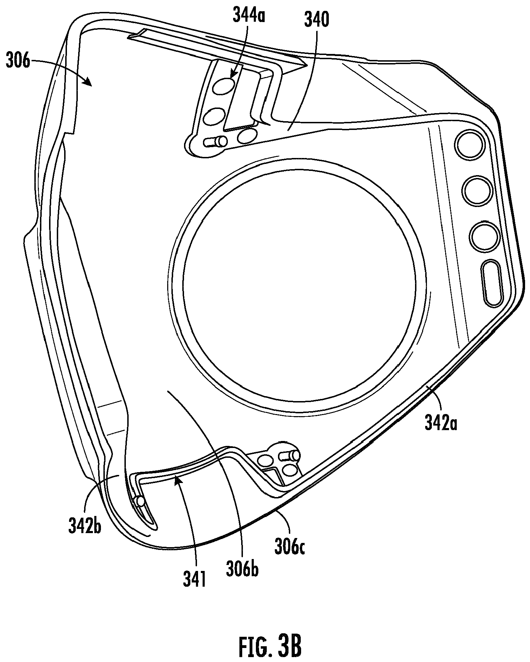

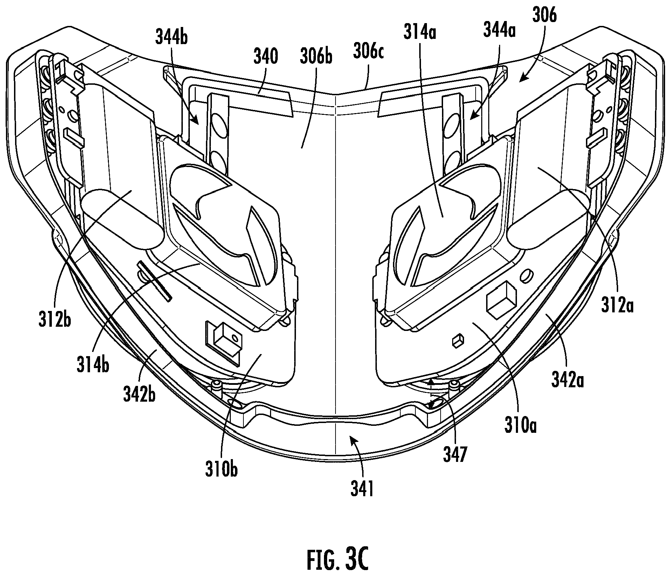

Referring now to FIG. 3A, FIG. 3B, and FIG. 3C, examples views of an example mask component 300 in accordance with some example embodiments described herein are illustrated. In particular, FIG. 3A illustrates an exploded view of an exemplary mask component 300 comprising an outer shell component 306, a structural rib element 340, and an inner shell component 316.

In various embodiments, the outer shell component 306 may define an at least substantially non-rigid configuration such that at least a portion of the outer shell component is bendable. For example, in various embodiments, the outer shell component 306 may be made of a thermoplastic polyurethane material.

Further, in various embodiments, an exemplary mask component 300 may comprise a structural rib 340 provided along one or more surfaces of the outer shell component 306 to function as a pliable frame element that provides structural support for the non-rigid outer shell component 306. In various embodiments, the structural rib 340 is defined by a partially rigid configuration. For example, in various embodiments, the outer shell component 306 may be made of an at least partially plastic material, such as, for example, a polycarbonate material.

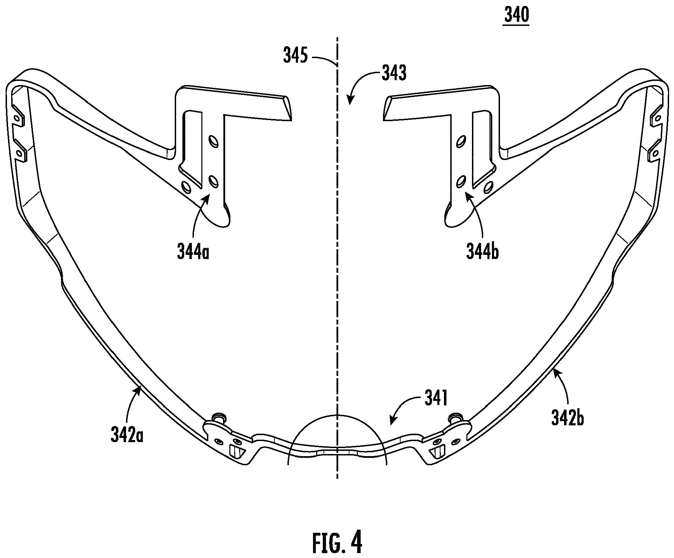

As an illustrative example, FIG. 4 illustrates a front view of an exemplary structural rib 340 in accordance with various embodiments described herein. In various embodiments, the exemplary structural rib 340 is configured for positioning along an inner surface of an outer shell component, such as, for example, the inner surface 306b of the outer shell component 306 illustrated in FIGS. 3A-3C. The structural rib 340 may operably support and/or strengthen the non-rigid outer shell component to which the structural rib 340 is secured. In various embodiments, the structural rib 340 may embody a pliable frame element configured to define a structural shape, one or more strength characteristics, and/or a bendable configuration defined by the outer shell component 306 connected thereto. For example, the exemplary structural rib 340 illustrated in FIG. 4 may be configured to at least substantially evenly and/or symmetrically distribute one or more supporting forces throughout the outer shell component 306 such that the structural integrity of the outer shell component to which the structural rib 340 is secured is at least partially dependent on the structural rib 340.

As shown in FIG. 4, the structural rib 340 may comprise first and second structural arm portions 342a, 342b defining the left and right sides of the structural rib 340, respectively, with a central rib portion disposed therebetween. For example, the central rib portion 341 may be defined by a central position along the bottommost portion of the structured rib 340 in between the first structural arm portions 342a and the second structural arm portion 342b. In various embodiments, the central rib portion 341 may be configured to facilitate the pliability of the structural rib 340 by defining a flexible configuration that allows for at least a portion of the structural rib 340 to be bent, stretched, and/or otherwise moved relative to the central rib portion 341 without the structural rib 340 being broken. For example, in various embodiments, the central rib portion 341 may define a rib thickness that is less than a second rib thickness defined by another portion of the structural rib 340 (e.g., the first and second structural arm portions 342a, 342b). As a non-limiting illustrative example, in various embodiments, the central rib portion 341 may have a first rib thickness of at least approximately between 0.5 mm and 0.9 mm (e.g., between 0.7 mm and 0.9 mm), and the second structural arm portions 342b may have a second rib thickness of at least approximately between 1.0 mm and 1.5 mm (e.g., between 1.1 mm and 1.3 mm). In various embodiments, as further illustrated, the first and second structural arm portions 342a, 342b may each be configured to extend from a respective lateral end of the central rib portion 341 defined at a bottom portion of the structural rib 340 to a respective distal arm end defined at a top portion of the structural rib 340. As illustrated the distal arm ends of the first and second structural arm portions 342a, 342b may be detached from one another so as to define a separation gap 343 enable a pliable configuration wherein one or both of the first and second structural arm portions 342a, 342b (e.g., the respective distal ends thereof) may be moved relative to the other structural arm portion. Such a flexible configuration may minimize the risk of the structural rib 340 breaking as a result of a force acting thereon. that that respective distal arm ends to move the further defined by a central position along the bottommost portion of the structured rib 340 in between the first structural arm portions 342a and the second structural arm portion 342b.

In various embodiments, an exemplary structural rib 340 may further comprise one or more apertures configured to facilitate an increased connection strength (e.g., binding force) between the structural rib 340 and the outer shell component 306 (e.g., the inner surface 306b) during the over-molding process. For example, as illustrated in FIG. 4, an exemplary structural rib 340 may comprise a first set of apertures 344a defined along the first structural arm portion 342a and a second set of apertures 344b defined along the second structural arm portion 342b. The first and second set of apertures 344a, 344b may be configured such that, during the over-molding process, each of the apertures engages with a respective portion of material so as to at least partially define one or more undercut structures configured to enhance the binding force acting between the outer shell component and the structural rib 340 during the over-molding process.

In various embodiments, may be symmetrical over a rib axis of symmetry 343. For example, the rib axis of symmetry 343 may embody a central axis of the structural rib 340 , such that, for example, the left side of the structural rib 340 is symmetrical to the right side of the structural rib 340. As illustrated, in various embodiments, the structural rib 340 may be configured such that one or both of the central rib portion 341 and the separation gap 343 may be centered on the rib axis of symmetry 343.

As shown in FIG. 3B, the structural rib 340 of an exemplary mask component 300 may be arranged along one or more surfaces of the outer shell component 306, such as, for example, an inner surface 306b of the outer shell component 306, to provide structural support for the non-rigid outer shell component 306. For example, in various embodiments, the structural rib 340 may define a pliable configuration wherein the structural rib 340 is configured to undergo an at least substantially elastic deformation that allows the outer shell component 306 engaged therewith to bend in one or more directions such that an outer shell assembly defined collectively by the outer shell component 306 and the structural rib 340 exhibit a flexible configuration. In various embodiments, the outer shell component 306 and the structural rib 340 of the exemplary mask component 300 may be made using an over-molding process. As illustrated in FIG. 3B, the structural rib 340 may be defined by a rib shape that corresponds at least in part to the shape of outer shell component 306 (e.g., the outer peripheral edge 306c). For example, the structural rib 340 may be configured for arrangement along a portion of the inner surface 306b that is at least substantially adjacent the peripheral edge 306 defined by the outer shell component 306 in order to maximize the effective area of the outer shell component 306 that is structurally supported by the structural rib 340. As a further example, an exemplary structural rib 340 4 may be configured to at least substantially evenly and/or symmetrically distribute one or more supporting forces throughout the outer shell component 306.

Referring back to FIG. 3A, in various embodiments, one or more surface of structural rib 340 may be configured to engage the inner shell component 316 in order to at least partially secure the position of the outer shell component 306 engaged therewith relative to the inner shell component 316. For example, as described in further detail herein, the structural rib 340 may comprise one or more surfaces configured for arrangement relative to the one or more corresponding portions of the welding lip 338 defined by the inner shell component 338. For example, the one or more surface of the structural rib 340 positioned at least substantially adjacent a corresponding portion of the welding lip 338 may be configured for coupling to the inner shell component 316 by using an ultrasonic welding means to secure the arrangement of the structural rib 340-and the outer shell component 306 engaged therewith-relative to an outer surface 316a of the inner shell component 316. In various embodiments, the welding lip 338 of an exemplary inner shell component 316 may have a configuration (e.g., a shape) that corresponds at least in part to the shape of the structural rib 340 such that the one or more surfaces defined by the structural rib 340 positioned at least substantially adjacent at least a portion of the welding lip 338 may be ultrasonically welded to the structural rib 340 to define an attachment interface at which the inner shell component 316 may be at least substantially permanently secured to the structural rib.

In various embodiments, the inner shell component 316 of an exemplary mask component 300 may be configured for coupling to the outer shell component 306 and/or the structural rib 340 (e.g., via a mechanical fastening means, an ultrasonic welding means, and/or the like) such that, upon the mask component 300 engaging a user's face at a face engagement portion 318 defined by the inner shell component 316, the structural rib 340 and the outer shell component 306 are arranged in an outward position relative to the outer surface 316a of the inner shell component 316. For example, in such an exemplary configuration, the structural rib 340 and the outer shell component 306 secured thereto may extend from the outer surface 316a of the inner shell component 316 such that outer surface 306a of the outer shell component 306 faces in a direction at least substantially away from the face of the user. As described in further detail herein, the welding lip 338 of the inner shell component 316 may be arranged along the outer surface 316a of the inner shell component 316. As an illustrative example shown in the exemplary embodiment illustrated in FIG. 3A, at least a portion of the welding lip 338 may be provided along a portion of the outer surface 316a at least substantially adjacent a perimeter edge of an inner shell indentation portion 320 (e.g., a second inner shell indentation portion 320B-similar to the first inner shell indentation portion 220A, as illustrated in FIG. 2A). In various embodiments, one or more non-continuous portions of the structural rib 340 may be configured for coupling with corresponding non-continuous portions of the welding rib 338. Additionally, and/or alternatively, in various embodiments, the structural rib 340 may be configured for coupling to the welding lip 338 along at least substantially the entire lip length of the structural rib 340 (e.g., defined at least in part by the collective lengths of each of the one or more structural arms) such that the structural rib 340 is positioned to be ultrasonically welded to the inner shell component 316 along an at least substantially continuous attachment interface.

In various embodiments, an exemplary mask component 300 may be configured such that at least a portion of the internal mask components, such as, for example, the electrical components, mechanical components, and/or the like configured to facilitate operation of the mask component 300, may be secured relative to the outer shell component 306 in order to at least partially isolate the various components from the ultrasonic vibrations transmitted through the inner shell component 316 during the ultrasonic welding process, as described herein. For example, FIG. 3C illustrates a rear view of an exemplary outer shell component 306 having a structural rib 340 attached thereto. As illustrated, one or more components, such as, for example, one or more circuit board components (such as, but not limited to, a first circuit board component 310A and/or a second circuit board component 310B), one or more charging circuit components (such as, but not limited to, a first charging circuit component 312A and/or first charging circuit component 312B), and one or more fan components (such as, but not limited to, a first fan component 314A and/or second fan component 314B) may be installed in an operating position relative to the outer shell component 306. For example, at least a portion of the above-referenced components of an exemplary mask component 300 may be secured relative to the inner surface 306b of the outer shell component 306 and disposed in the space that is defined by an inner shell indentation portion of the inner shell component (e.g., the inner shell indentation portion 220A of the inner shell component 316 shown in FIGS. 2B-2C) and the inner surface 306b of the outer shell component 306. Further, in various embodiments, each of the above-referenced internal mask components secured in an installed position relative to the inner surface 306b of the outer shell component 306 may be separated from the nearest portion of the structural rib 340 by a separation distance (e.g., a gap) of at least 1.0 mm. The mask component 300 may be configured to define a separation distance between the structural rib 340 and each of the internal mask components secured relative to the inner surface 306b of the outer shell component 306 in order to maintain a clearance between the internal mask components and the structural rib such that the internal mask components remain at least substantially isolated from the vibrations passing through the structural rib 340 during the ultrasonic welding process.

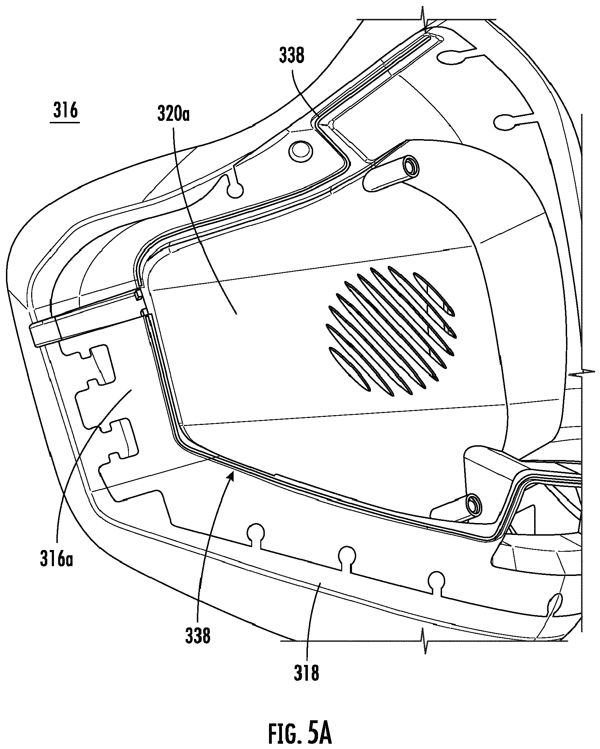

FIG. 5 illustrates a perspective view of an inner shell component of an exemplary mask component in accordance with various example embodiments described herein. As illustrated, in various embodiments, the inner shell component 316 may comprise a welding lip 338 arranged along an outer surface 316a of the inner shell component 316 in order to enable an engagement of the welding lip 338 with at least a portion of a structural rib secured to the outer shell component of an exemplary mask component (e.g., the structural rib 340 described herein with respect to the exemplary embodiments illustrated in FIGS. 3A-3C and FIG. 4), such that the inner shell component 316 may secure an outer shell component relative to the outer surface 316a thereof via an ultrasonic welding of the welding lip 338 to the structural rib. As described herein, the welding lip 338 may be configured for coupling to one or more surfaces of the structural rib via an ultrasonic welding means in order to define one or more attachment interfaces at which the inner shell component 316 is at least partially secured relative to the structural rib.

As illustrated, the welding lip 338 may protrude perpendicularly away from the outer surface 316a of the inner shell component 316 in an at least substantially outward direction. The welding lip 338 may be defined at least in part by a lip height defined by the perpendicular distance between the outermost edge of the welding lip (e.g., a distal lip edge) and the surface from which the welding lip 338 protrudes (e.g., the outer surface 316a), as measured in an outward direction. In various embodiments, the lip height of the welding lip 338 may be at least substantially between 0.2 mm and 1.0 mm (e.g., between 0.3 mm and 0.7 mm).

As illustrated, the welding lip 338 may be further defined by a lip length provided along at least a portion of the outer surface 316a of the inner shell component 316 in an arrangement that at least partially corresponds to the shape and/or configuration of the structural rib to which the welding lip 338 is configured to be welded. For example, the welding lip 338 may be provided along at least a portion of a perimeter edge of one or more inner shell indentation portions, such as, for example, inner shell indentation portion 320A, defined by the inner shell component 316. The welding lip 338 may be configured (e.g., shaped) such that, upon an outer shell component being detachably secured in an aligned position relative to the inner shell component 316 (e.g., via an engagement between respective shell alignment elements defined by the outer and inner shell components), the welding lip 338 may be disposed at least substantially adjacent one or more surfaces of the structural rib secured to the outer shell component. For example, the mask component may be configured such that, upon the outer shell component being detachable secured in the aligned position, the welding lip 338 (e.g., the distal lip edge thereof) is at least substantially continuously engaged with one or more corresponding surfaces of the structural rib along the lip length of the welding lip 338. Such an exemplary configuration of the welding lip 338 may enable one or more portions along the lip length of the welding lip 338 to be ultrasonically welded to a corresponding surface of the structural rib at least substantially adjacent thereto in order to establish one or more attachment interfaces at which the inner shell component 316 is operably coupled to the outer shell component (e.g., via the structural rib).

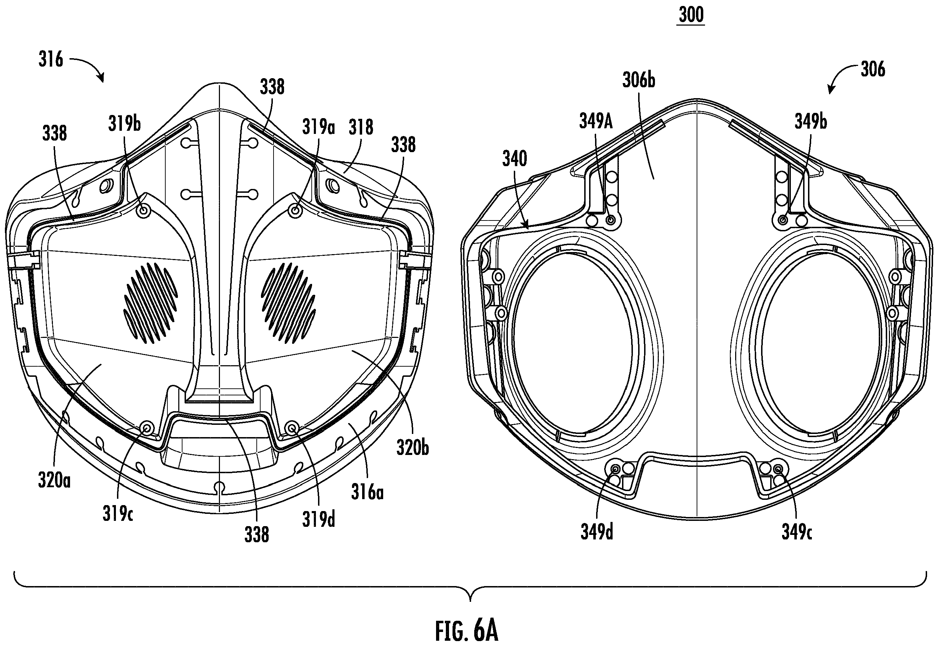

In various embodiments, one or both of the outer shell component and the inner shell component of an exemplary mask component may comprise a shell alignment element configured to engage a corresponding portion of the other shell component (e.g., either the inner shell component or the outer shell component) to facilitate a detachable connection between the inner and outer shell components in which the outer shell component is arranged in an aligned position relative to the inner shell component. For example, FIG. 6A illustrates an exemplary mask component 300 wherein the inner shell component 316 comprises a plurality of inner shell alignment elements 319a, 319b, 319c, 319d provided along an outward-facing surface (e.g., outer surface 316a) of the inner shell component 316, and the structured rub 340 secured relative to the inner surface 306b of the comprises a plurality of outer shell alignment elements 349a, 349b, 349c, 349d. As illustrated, the plurality of inner shell alignment elements 319a, 319b, 319c, 319d may be distributed about the outer surface 316a of the inner shell component 316 so as to be accessible for selective engagement with the plurality of outer shell alignment elements 349a, 349b, 349c, 349d defined by the structural rib 340 and positioned relative to the inner surface 306b of the outer shell component 306.

In various embodiments, each of the inner shell alignment elements 319a, 319b, 319c, 319d may be configured for selective engagement with a corresponding one of the outer shell alignment elements 349a, 349b, 349c, 349d such that a detachable connection is established with the corresponding outer shell alignment element. For example, as a non-limiting illustrative example, the exemplary mask component 300 illustrated in FIG. 6A, at least a portion of the alignment elements defined by the inner shell component 316 (e.g., the inner shell alignment elements 319a, 319b, 319c, 319d) and/or the outer shell element 306 (e.g., the outer shell alignment elements 349a, 349b, 349c, 349d) may embody a mechanical fastener element having a configuration that corresponds to that of a corresponding alignment element (e.g., defined by the other shell component) such that an engagement with the corresponding alignment element is defined by a snap connection, a buckle connection, and/or the like, or any other mechanical fastening connection that operably secures the corresponding alignment elements relative to one another in a detachable manner. For example, in various embodiments, each of the plurality of inner shell alignment elements 319a, 319b, 319c, 319d may embody a female buckle fastener configured to receive a corresponding outer shell alignment element 349a, 349b, 349c, 349d that embodies a male buckle fastener. As described herein, the male buckle fasteners defined by the outer shell alignment elements 349a, 349b, 349c, 349d may each be configured to snap into a respective female buckle fastener defined by the corresponding inner shell alignment element 319a, 319b, 319c, 319d.

In various embodiments, the mask component 300 may be configured such that, prior to the ultrasonic welding of the inner shell component 316 (e.g., the welding lip 338) to the structural rib 340 coupled to the outer shell 306, the outer shell component 306 may be arranged in an aligned position by coupling each of the outer shell alignment elements 349a, 349b, 349c, 349d with a corresponding one of the inner shell alignment elements 319a, 319b, 319c, 319d. As an illustrative example, the exemplary mask component 300 illustrated in FIG. 6A may be configured such that a first inner shell alignment element 319a is configured for detachable connection with a first outer shell alignment element 349a, a second inner shell alignment element 319b is configured for detachable connection with a second outer shell alignment element 349b, a third inner shell alignment element 319c is configured for detachable connection with a third outer shell alignment element 349c, and a fourth inner shell alignment element 319d is configured for detachable connection with a fourth outer shell alignment element 349d. In such an exemplary circumstance, the arrangement of the outer shell component 306 in an aligned position relative to the inner shell component 316, as described herein, my may be defined by four distinct detachable connections between corresponding pairs of inner shell alignment elements 319a, 319b, 319c, 319d and outer shell alignment elements 349a, 349b, 349c, 349d.

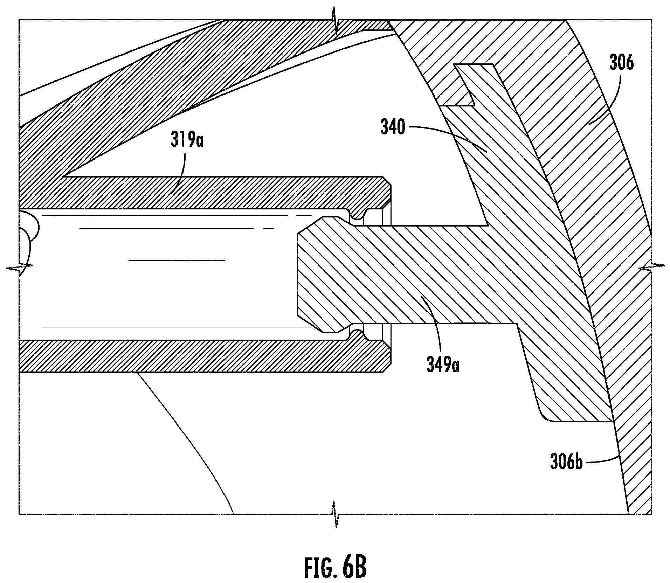

FIG. 6B illustrates an isolated view of an exemplary outer shell alignment element 349a detachably connected to an inner shell alignment element 319a of the inner shell component 316. As illustrated, an inner shell alignment element 319a of an exemplary inner shell component 316 may embody a female buckle fastener having an at least partially tubular configuration defined by a sidewall and an interior portion within which the inner shell alignment element 319a is configured to receive the corresponding outer shell alignment element 349a embodying a male buckle fastener. In various embodiments, the detachable connection of the inner and outer shell alignment elements 319a, 349a is enabled by the inner shell alignment element 319a having a raised portion that protrudes from an interior surface in an inward direction into the interior portion of the inner shell alignment element 319a. For example, the raised feature provided within the interior portion of the inner shell alignment element 319a may be configured to engage a front-facing surface of a head portion defined by the corresponding outer shell alignment element 349a as the outer shell alignment element 349a is received within the interior portion of the inner shell alignment element 319a. Such a physical contact between the raised portion of the inner shell alignment element 319a and the front-facing surface of the head portion of the outer shell alignment element 349a may cause the outer shell alignment element 349a to be snapped into the inner shell alignment element 319a. Further, upon the outer shell alignment element 349a being snapped into the inner shell alignment element 319a, the raised portion may be configured to act as a physical obstruction that engages a rear-facing surface of the head portion defined by the outer shell alignment element 349a to at least partially restrict the movement of the outer shell alignment element 349a away from the inner shell alignment element 319a in order to retain the outer shell alignment element 349a within the inner shell alignment element 319a.

In various embodiments, one or both of the rear-facing and front facing surfaces of the head portion defined by the outer shell alignment element 349a may embody a chamfered engagement surface having an angular configuration configured to facilitate the snapped connection described above and the detachable configuration of the outer shell alignment element 349a relative to the inner shell alignment element 319a. For example, in various embodiments, a chamfered engagement surface defined by the outer shell alignment element 349a may be configured for physically contacting the corresponding inner shell alignment element 319a (e.g., a raised portion protruding into the interior portion thereof). Further, the chamfered engagement surface of may define an angled configuration configured to at least partially reduce a resistance force imparted on the outer shell alignment element 349a as the outer shell alignment element 349a moves relative to the corresponding inner shell alignment element 319a engaged therewith. As a non-limiting example, in various embodiments, For example, an exemplary outer shell alignment element 349a defined by a structural rib 340 may include a head portion having a chamfered engagement surface with an angled configuration defined by a chamfer angle that is at least approximately between 20 degrees and 60 degrees (e.g., between 30 degrees and 40 degrees). In such an exemplary configuration, the outer shell alignment element 349a may only be detached from the inner shell alignment element 319a by a separation force that pulls the outer shell component 306 away from the inner shell component 316 has a magnitude greater than a predetermined threshold detachment force.

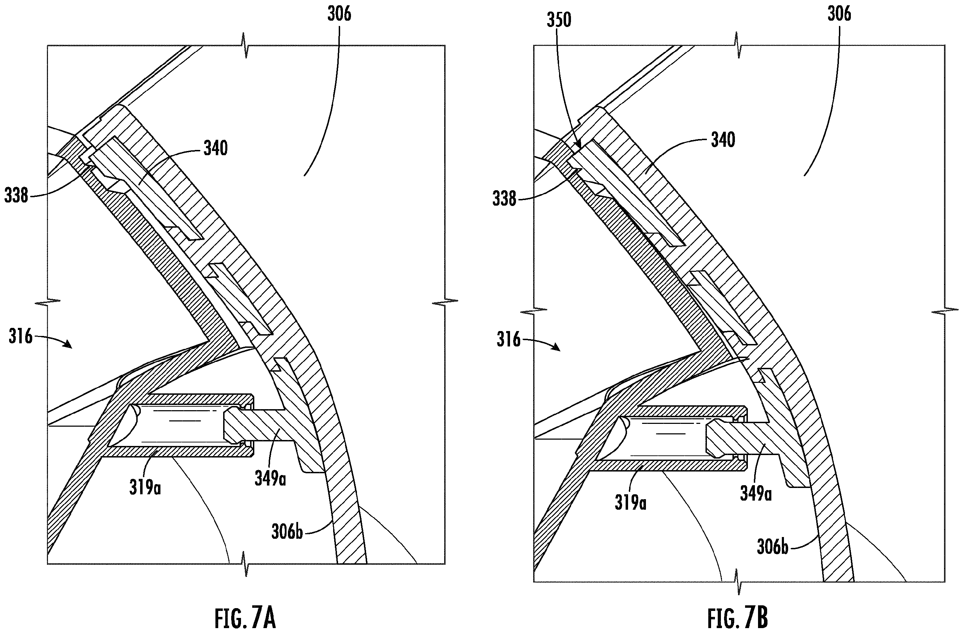

FIGS. 7A and 7B illustrate isolated cutaway views of various components of an exemplary mask component according to various embodiments described herein. In particular, FIGS. 7A-7B illustrate an outer shall component secured in an aligned position relative to an inner shall component via an engagement between an inner shell alignment element defined by the inner shell component and an outer shell alignment element defined by the structural rib operably attached to the outer shell component. FIG. 7A and FIG. 7B illustrate an exemplary mask component 300 wherein the structural rib 340 is provided in a non-welded condition and a welded condition, respectively, relative to the welding lip 338 of the inner shell component 316. As described herein, the exemplary outer shell component 306 being arranged in the aligned position corresponds to the welding lip 338 of the inner shell component 316 being at least partially aligned with and/or adjacent to one or more corresponding surfaces of the structural rib 340. For example, as illustrated in FIG. 7A, upon the outer shell alignment element 349a being detachably secured within the corresponding inner shell alignment element 319a, at least one surface of the structural rib 340 (e.g., a ledge, a protrusion, a face, and/or the like, or any other physical feature of the structural rib 340 that is accessible to the inner shell component) may be positioned at least substantially adjacent a length of the welding lip 338 such that the at least one surface of the structural rib 340 is physically abutted against the distal outer edge of the welding lip 338. The exemplary structural rib 340 shown in FIG. 7A defines a non-welded configuration relative to the welding lip 338, wherein the alignment elements of the inner and outer shell components 306, 316 are engaged with one another such that the outer shell component 306 is operably connected to the inner shell component 316, but the one or more surfaces of the structural rib 340 has not yet been at least substantially permanently coupled (e.g., ultrasonically welded) to the welding lip 338 engaged therewith. As such, the exemplary mask component 300 illustrated in FIG. 7A maintains a detachable configuration, as the non-welded configuration of the structural rib 340 relative to the welding lip 338 is defined by the welding lip 338 and the structural rib 340 being physically distinct components.

FIG. 7B illustrates the exemplary structural rib 340 in a welded configuration relative to the welding lip 338, wherein the one or more surfaces of the structural rib 340 have been ultrasonically welded to the welding lip 338 defined by the inner shell component 316 so as to at least substantially permanently couple the structural rib 340 and the outer shell component 306 attached thereto to the inner shell component 316. For example, a structural rib 340 in a welded configuration relative to the welding lip 338 may define one or more attachment interfaces 350 at which the outer shell component 306 is at least partially secured relative to the inner shell component 316 (e.g., via the one or more surfaces of the structural rib 340). For example, the structural rib 340 may be configured such that, upon the coupling of the structural rib 340 to the welding lip 338 via an ultrasonic welding means, the attachment interface 350 defined between the structural rib 340 and the welding lip 338 welded thereto may be defined along at least a portion of the lip length of the welding lip 338, such as, for example, at least substantially the entire lip length of the welding lip 338. As such, the exemplary mask component 300 illustrated in FIG. 7B defines a permanent connection of the outer shell component 306 relative to the inner shell component 316, as the welded configuration of the structural rib 340 relative to the welding lip 338 is defined by the two previously physically distinct components being compositionally reconfigured so as to collectively function as a singular component. In various embodiments, the ultrasonic welding of the structural rib 340 relative to the welding lip 338 may result in at least partial rearrangement, shift, settling, and/or the like of one or more other components of the outer shell component 306 and/or the inner shell component 316. For example, as illustrated in FIG. 7B, the ask component 300 may be configured such that the structural rib 340 being in the welded configuration relative to the welding lip 338 causes the at least a portion of the outer shell alignment element 349a secured to the corresponding inner shell alignment element 319a to move in an inward direction relative to the inner shell alignment element 319a as the structural rib 340 is pulled at least partially towards the outer surface 316a of the inner shell component 316 during the ultrasonic welding process. In various embodiments, the inner shell alignment element 319a may be configured to facilitate such a shift in position of the outer shell alignment element 349a caused by the above-described ultrasonic welding process, such as, for example, by defining an interior portion with a sufficiently large depth to avoid obstructing the inward movement of the head portion of the outer surface alignment element 349a within the interior portion of the inner shell alignment element 319a.

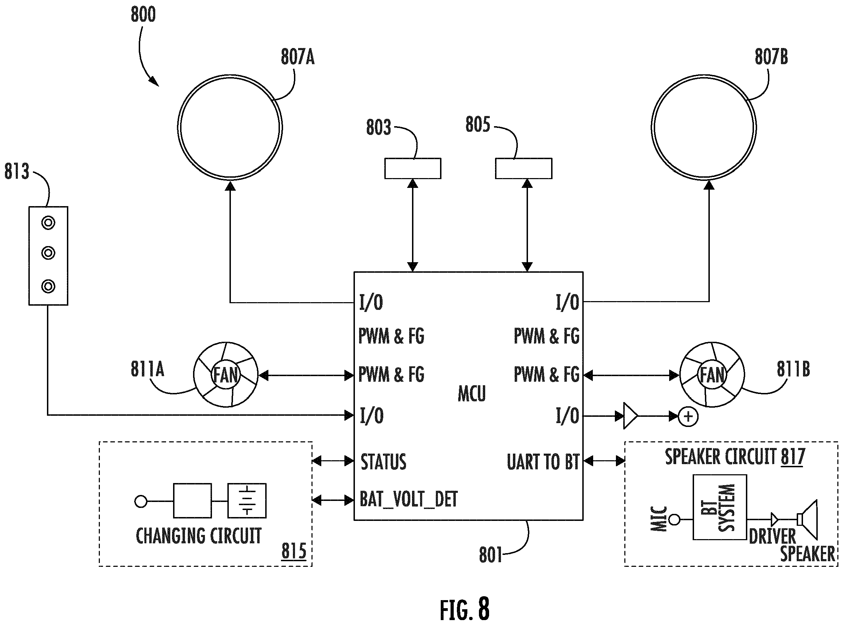

Referring now to FIG. 8, an example circuit diagram of an example respiratory protective device 800 in accordance with some example embodiments described herein is illustrated. In particular, FIG. 8 illustrates example electronic components of an example respiratory protective device in accordance with various example embodiments of the present disclosure.

As shown in FIG. 8, the example respiratory protective device 800 may comprise a controller component 801 that is in electronic communications with other components such as, but not limited to, the pressure sensor component 803, the humidity sensor component 805, a light 807A and a light 807B that are disposed on one or more puck components, fan component 811A, fan component 811B, key components 813, and/or the speaker circuit 817.

In some embodiments, the controller component 301 may be embodied as means including one or more microprocessors with accompanying digital signal processor(s), one or more processor(s) without an accompanying digital signal processor, one or more coprocessors, one or more multicore processors, one or more controllers, processors, one or more computers, various other processing elements including integrated circuits such as, for example, an application specific integrated circuit (ASIC), programmable logic controller (PLC) or field programmable gate array (FPGA), or some combination thereof. Accordingly, although illustrated in FIG. 8 as a single processor, in an embodiment, the controller component 801 may include a plurality of processors and signal processing modules. The plurality of processors may be in operative communication with each other and may be collectively configured to perform one or more functionalities as described herein. In an example embodiment, the controller component 801 may be configured to execute instructions stored in a memory circuitry or otherwise accessible to the controller component.

Whether configured by hardware, firmware/software methods, or by a combination thereof, the controller component 301 may include an entity capable of performing operations according to embodiments of the present disclosure while configured accordingly. Thus, for example, when the controller component 801 is embodied as an ASIC, PLC, FPGA or the like, the controller component 801 may include specifically configured hardware for conducting one or more operations described herein. Alternatively, as another example, when the controller component 801 is embodied as an executor of instructions, such as may be stored in the memory circuitry, the instructions may specifically configure the controller component 801 to perform one or more algorithms and operations described herein.

Thus, the controller component 801 used herein may refer to a programmable microprocessor, microcomputer or multiple processor chip or chips that can be configured by software instructions (applications) to perform a variety of functions, including the functions of the various embodiments described above.

In some embodiments, the memory circuitry may include suitable logic, circuitry, and/or interfaces that are adapted to store a set of instructions that is executable by the controller component 801 to perform predetermined operations. Some of the commonly known memory implementations include, but are not limited to, a hard disk, random access memory, cache memory, read only memory (ROM), erasable programmable read-only memory (EPROM) & electrically erasable programmable read-only memory (EEPROM), flash memory, magnetic cassettes, magnetic tape, magnetic disk storage or other magnetic storage devices, a compact disc read only memory (CD-ROM), digital versatile disc read only memory (DVD-ROM), an optical disc, circuitry configured to store information, or some combination thereof. In an example embodiment, the memory circuitry may be integrated with the controller component 301 on a single chip, without departing from the scope of the disclosure.

In some embodiments, the pressure sensor component 803 may transmit air pressure indications to the controller component 801. As described above, each of the air pressure indications may comprise an air pressure value that corresponds to the air pressure in the enclosed space as defined by the face seal component 318 and the inner shell component 316.

In some embodiments, the humidity sensor component 805 may transmit humidity indications to the controller component 801. As described above, the humidity indications may indicate relative humidity levels within the example respiratory protective device. For example, the humidity indications may indicate relative humidity levels within the enclosed space defined by the face seal component and the inner shell component of the respiratory protective device on at least a portion of the user's face.

In some embodiments, the controller component 801 may transmit control signals to the light 807A and/or the light 807B so as to adjust the color and/or intensity of the light emitted by the light 807A and/or the light 807B.

In some embodiments, the controller component 801 may transmit forward rotation start signals to the fan component 811A and/or the fan component 811B to cause the fan component 811A and/or the fan component 811B to start forward rotation. In some embodiments, the controller component 801 may transmit forward rotation stop signals to the fan component 811A and/or the fan component 311B to cause the fan component 811A and/or the fan component 811B to stop forward rotation.

In some embodiments, the controller component 801 may transmit reverse rotation start signals to the fan component 811A and/or the fan component 811B to cause the fan component 811A and/or the fan component 811B to start reverse rotation. In some embodiments, the controller component 801 may transmit reverse rotation stop signals to the fan component 811A and/or the fan component 811B to cause the fan component 811A and/or the fan component 811B to stop reverse rotation.

In some embodiments, the controller component 801 is in electronic communication with the key components 813. For example, when a user presses a button on the key components 813, the key components 813 may transmit a signal to the controller component 801.

In some embodiments, the controller component 801 is in electronic communication with the speaker circuit 817. For example, the controller component 801 may transmit control signals to an earphone in the speaker circuit 817 so as to adjust volume, noise canceling mode, and/or the like of the earphone.

In some embodiments, the charging circuit 815 supplies power to controller component 301 and one or more other electronic components shown in FIG. 8 (such as, but not limited to, the fan component 811A and the fan component 811B).

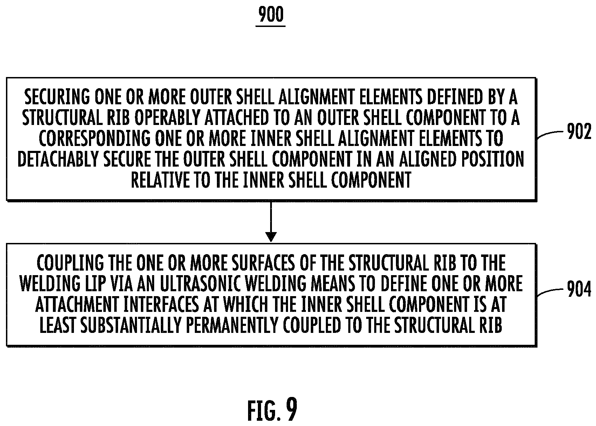

FIG. 9 illustrates an example flow diagram showing steps of an exemplary method of assembling an exemplary mask component in accordance with various embodiments of the present disclosure described herein. In various embodiments, the exemplary method 900 illustrated in FIG. 9 may be performed in reference to one or more embodiments depicted in FIGS. 1-8. In some embodiments, portions of the depicted process may be performed individually or in sub-combinations without departing from the scope of the present disclosure.

With reference to method 900 of FIG. 9, as depicted at step 902, one or more outer shell alignment elements defined by a structural rib operably attached to an outer shell component may be secured to a corresponding one or more inner shell alignment elements to detachably secure the outer shell component in an aligned position relative to the inner shell component. As described herein, the outer shell component being in the aligned position may be defined by one or more surfaces of the structural rib being disposed at least substantially adjacent a welding lip defined by the inner shell component.

In various embodiments, as shown at step 904, the one or more surfaces of the structural rib may be coupled to the welding lip via an ultrasonic welding means to define one or more attachment interfaces at which the inner shell component is at least substantially permanently coupled to the structural rib. For example, such an exemplary configuration wherein the outer shell component is provided in the aligned position may facilitate a subsequent coupling operation wherein the inner shell component is at least substantially permanently coupled to the structural rib by ultrasonically welding the welding lip of the inner shell component to a surface of the structural rib that is disposed at least substantially adjacent thereto.

In various embodiments, coupling the one or more surfaces of the structural rib to the welding lip via the ultrasonic welding means comprises may further comprise vibrating the inner shell component using ultrasonic vibrations generated by a vibration generator engaged with the inner shell component such that at least a portion of the welding lip engaged with the structural rib is at least partially melted. In various embodiments, an exemplary vibration generation may be placed in contact with at least a portion of the inner shell component. For example, the vibration generator may be operated such that ultrasonic vibrations are transmitted to at least a portion of the welding lip in contact with a surface of the structural rib, which may result in at least substantially high temperatures within the welding lip. Further, in various embodiments, the outer shell component of the mask component may be engaged by an at least substantially rigid fixture plate while the inner shell component is being vibrated so as to at least partially isolate the outer shell component-and the electronica and/or other subcomponents of the mask component installed therein-from the ultrasonic vibrations vibrating the inner shell component. The increased temperature caused by the ultrasonic vibrations may be sufficiently high to cause at least a portion of the welding lip to at least partially melt. In such an exemplary circumstance, ultrasonically welding the welding lip to the structural rib may further include, upon the at least a portion of the welding lip engaged with the structural rib being at least partially melted, stopping the ultrasonic vibrations to enable a cooling of the at least partially melted welding lip. For example, the cooling of the at least partially melted welding lip may be defined at least in part by a re-solidified portion of the welding lip being at least substantially bonded to the one or more surface of the structural rib.

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A mask component for a respiratory protective device, the mask component comprising:
an inner shell component configured to engage a face of a user;
an outer shell component having an at least substantially non-rigid configuration such that at least a portion of the outer shell component is bendable; and
a structural rib provided along one or more surfaces of the outer shell component, the structural rib having an at least partially rigid configuration such that the structural rib is configured to provide structural support for the non-rigid outer shell component;
wherein the structural rib is configured to detachably engage at least a portion of the inner shell component to secure the outer shell component in an aligned position relative to the inner shell component; and
wherein the aligned position is defined by one or more surfaces of the structural rib being disposed at least substantially adjacent a welding lip defined by the inner shell component, the welding lip being configured for coupling to the one or more surfaces of the structural rib via an ultrasonic welding means to define one or more attachment interfaces at which the inner shell component is at least partially secured relative to the structural rib.

2. The mask component of claim 1, wherein the welding lip defined by the inner shell component is provided along at least a portion of one or more outer surfaces of the inner shell component.

3. The mask component of claim 2, wherein at least a portion of the welding lip is arranged at least substantially adjacent a perimeter edge defined by an inner shell indentation portion of the inner shell component.

4. The mask component of claim 1, wherein at least a portion of the outer shell component is made from a thermoplastic polyurethane material.

5. The mask component of claim 1, wherein at least a portion of the structural rib is made from a polycarbonate material.

6. The mask component of claim 1, structural rib comprises a central rib portion defined by a first rib thickness, and one or more rib arm portions defined by a second rib thickness, wherein the first rib thickness is at least substantially less than the second rib thickness.

7. The mask component of claim 1, wherein the structural rib is formed using an over-molding process.

8. The mask component of claim 1, wherein the ultrasonic welding means is defined at least in part by causing a vibration of the inner shell component using ultrasonic vibrations such that at least a portion of the welding lip engaged with the structural rib is at least partially melted.

9. The mask component of claim 1, wherein one or more internal mask components configured to enable operation of the mask component are secured in an installed position relative to an inner surface of the outer shell component.

10. A mask component for a respiratory protective device, the mask component comprising:
an inner shell component configured to engage a face of a user, the inner shell component comprising one or more inner shell alignment elements;
an outer shell component having an at least substantially non-rigid configuration such that at least a portion of the outer shell component is bendable; and
a structural rib provided along one or more surfaces of the outer shell component and configured to provide structural support for the non-rigid outer shell component, the structural rib defining one or more outer shell alignment elements configured to engage the one or more inner shell alignment elements to operably couple the structural rib to the inner shell component via a detachable connection;
wherein the one or more inner shell alignment elements are distributed about an outer surface of the inner shell surface such that, upon establishing the detachable connection of the structural rib to the inner shell component, the outer shell element is disposed in an aligned position in which one or more surfaces of the structural rib are disposed at least substantially adjacent a welding lip defined by the inner shell component such that the welding lip is configured for coupling to the one or more surface of the structural rib via an ultrasonic welding means.

11. The mask component of claim 10, wherein the one or more inner shell alignment elements define a plurality of inner shell alignment elements and the one or more outer shell alignment elements define a plurality of outer shell alignment elements, each of the plurality of inner alignment elements being configured for engagement with a respective outer shell alignment element of the plurality of outer shell alignment elements.

12. The mask component of claim 10, wherein each of the one or more outer shell alignment elements comprises at least one chamfered engagement surface configured for physically contacting the corresponding inner shell alignment element, wherein the chamfered engagement surface defines an angled configuration configured to at least partially reduce a resistance force imparted on the outer shell alignment element as the outer shell alignment element moves relative to the corresponding inner shell alignment element engaged therewith.

13. The mask component of claim 10, wherein the structural rib is formed using an over-molding process.

14. A method of assembling a mask component for a respiratory protective device, the method comprising:
securing one or more outer shell alignment elements defined by a structural rib operably attached to an outer shell component to a corresponding one or more inner shell alignment elements to detachably secure the outer shell component in an aligned position relative to the inner shell component, wherein the aligned position is defined by one or more surfaces of the structural rib being disposed at least substantially adjacent a welding lip defined by the inner shell component; and
coupling the one or more surfaces of the structural rib to the welding lip via an ultrasonic welding means to define one or more attachment interfaces at which the inner shell component is at least substantially permanently coupled to the structural rib.

15. The method of claim 14, wherein coupling the one or more surfaces of the structural rib to the welding lip via the ultrasonic welding means comprises:
vibrating the inner shell component using ultrasonic vibrations generated by a vibration generator engaged with the inner shell component such that at least a portion of the welding lip engaged with the structural rib is at least partially melted; and
upon the at least a portion of the welding lip engaged with the structural rib being at least partially melted, stopping the ultrasonic vibrations to enable a cooling of the at least partially melted welding lip;
wherein the cooling of the at least partially melted welding lip is defined at least in part by a re-solidified portion of the welding lip being at least substantially bonded to the one or more surface of the structural rib.
